Europäisches Patentamt

European Patent Office

Office européen des brevets

(19)

(11) Publication number: **0 049 357**
**A1**

(12) # EUROPEAN PATENT APPLICATION

(21) Application number: **81106602.6**

(22) Date of filing: **26.08.81**

(51) Int. Cl.³: **A 23 F 5/22**

(30) Priority: **08.10.80 CH 7504'80**

(43) Date of publication of application:
**14.04.82 Bulletin 82'15**

(84) Designated Contracting States:
**BE FR IT LU NL SE**

(71) Applicant: **SOCIETE DES PRODUITS NESTLE S.A.**
Case postale 353
**CH-1800 Vevey(CH)**

(72) Inventor: **Blanc, Maurice**
Résidence de la Côte 30
**CH-1110 Morges(CH)**

(72) Inventor: **Margolis, Geoffrey**
Ch. de la Potteilaz 42
**CH-1030 Bussigny(CH)**

(54) **Caffeine extraction.**

(57) A process is described for extracting caffeine from an aqueous solution derived from green coffee, using a non-ionic microporous resin having pores with an average diameter of 6 to 40 Å and desirably a specific surface area of more than 400 $m^2/g$.

These resins have a great affinity for caffeine and may be regenerated by means of hot polar solvents.

The process may form part of a process for the total or partial decaffeination of green coffee.

## Process for extracting caffeine

This invention relates to a process for extracting caffeine from an aqueous solution containing it together with non-caffeine solids, this aqueous solution being obtained from green coffee. It can therefore be used for the decaffeination of green coffee.

It is well known that there is currently a popular demand for decaffeinated coffee and that it is enjoying a growing popularity for medical or dietetic reasons or more simply for reasons connected with lifestyle. Consequently, the food industry produces large quantities of decaffeinated coffee or coffee extracts, generally using techniques which require the use of chlorinated solvents.

However, the use of these solvents has two disadvantages. On the one hand, they are inedible and must be carefully removed from the coffee after the decaffeination process. On the other hand, they are highly volatile and very great care must be taken in handling them.

Attempts have therefore been made to decaffeinate coffee by processes of a different kind, for example by decaffeination with water, e.g. by processes in which the caffeine present in an aqueous coffee extract is adsorbed onto ionic resins. However, these resins have the drawback that they alter the pH of the treated coffee; the initial pH therefore has to be restored and this involves adding to the coffee substances which are naturally alien to it, notably neutralising agents. It has also been proposed to use active charcoal as an adsorbent for caffeine, but it has been quickly found that, in addition to caffeine, it retained considerable quantities of non-caffeine solids. Since the ratio of adsorbed non-caffeine solids to caffeine is very much against caffeine, it is necessary to recover these non-caffeine solids in order to re-introduce them into the coffee and this requires complicated procedures.

The present invention avoids the disadvantages described above since it makes use of resins having a particular affinity for caffeine. Thus, according to the invention, there is provided a process for extracting caffeine from an aqueous solution containing it together with other non-caffeine solids, the aqueous solution having been derived from green coffee, characterised in that the solution is contacted with a non-ionic microporous resin having pores with an average diameter of from 6 to 40 $\overset{o}{A}$, whereby caffeine is extracted from said solution.

This non-ionic microporous resin does not modify the pH of the contacted solution, or at least any change which may occur is insignificant, and consequently there is no need for subsequent correction. The resin preferably has a specific surface area of at least 400 m$^2$/g. The aqueous starting solution generally contains 1 to 30% by weight of total soluble matter.

In other words, the green coffee used at the beginning to produce the aqueous solution is freed from caffeine and non-caffeine solids which pass directly into this solution. In turn, this solution is freed from caffeine and non-caffeine solids which are retained by the resin.

In one embodiment for the decaffeination of green coffee, the treated solution is returned to the treated green coffee of the same batch or of a different batch.

In another embodiment which is additional to or distinct from the previous one, referred to as the process "with recycling", the treated solution is brought into contact with untreated green coffee, so as to obtain a new aqueous solution which will, in turn, be brought into contact with the resin, and so on. In other words, the aqueous solution decaffeinated by the resin is used to extract caffeine and non-caffeine solids from the green coffee. All in all., the caffeine-reduced solution will only take caffeine and non-caffeine solids from the green coffee in the proportions in which they have been. adsorbed by the resin.

As will be seen, the particular resin which may be used in the process has a great affinity for caffeine, the ratio of fixed non-caffeine solids to caffeine generally being of the order of 0.6:1 to 1.7:1. Thus, in the final analysis, the losses of non-caffeine solids are on average comparable with the caffeine content of the coffee, i.e. very acceptable. For the same reasons, connected with the proportions of non-caffeine solids to caffeine in the coffee, the degree of decaffeination will be excellent. Decaffeination levels of 97 to 99% may be reached without any special difficulties or complications.

Of course, lower levels corresponding to partial decaffeination may also be obtained very easily.

If desired, a combined operating procedure may advantageously be used, for example with recycling for a given period, then finishing by adding the treated aqueous solution to treated green coffee.

.Whichever embodiment is used, the treated solution is advantageously concentrated before being added to the treated or untreated green coffee. Similarly, the treated green coffee is preferably dried before being brought into contact with the treated solution.

Examples of resins having pores with an average diameter of 6 to 40 Å, which may be used in the process include the calcination products of styrene/divinylbenzene copolymer resins, especially those marketed under the trade mark ® Ambersorb XE-340 and XE-348 by Messrs. Rohm & Haas. In fact, these resins have a pore distribution such that about 20 % of the pores have an average diameter of 6 to 40 Å. They conveniently take the form of small, hard, dust-free spherical beads.

When the aqueous solution is contacted with these resins in accordance with the process of the invention, the very great affinity of these resins for caffeine becomes apparent, the ratio of adsorbed non-caffeine solids to caffeine being of the order of 0.6:1 to 1.7:1, as indicated hereinbefore. Moreover, this ratio is all the more favourable, the higher the temperature, and this is why the process is preferably carried out at from 60 to 90°C. Temperatures in this range promote the exchanges and accelerate the adsorption rate, thus leading to better hourly rates. Finally, there are no fears of any of the bacteriological problems which could arise at a lower temperature.

According to well known techniques, the contacting may be effected in counter-current or direct manner. For a decaffeination level of about 97%, i.e. for a degree of decaffeination similar to total decaffeination, the ratio of resin to total soluble matter will preferably be from 0.5:1 to 2.5:1, i.e. 0.5 to 2.5 kg of resin per kg of total soluble matter. For coffees or mixtures of coffees having, say, a caffeine content of 1.2 to 1.4% dry weight, the ratio of resin to total soluble matter will typically be from 0.5:1 to 1:1.

For partial decaffeination, it is sufficient to use less resin, two to three times less, for example, for semi-decaffeination.

The aqueous solution containing caffeine and non-caffeine solids is obtained by contact with green coffee. For this purpose, water, preferably deionised water is used, or the aqueous solution treated by the resin, for example in a process with recycling. This contact with the green coffee advantageously lasts from 2 to 10 hours at a temperature of from 60 to 90°C. Below 60°C there may be bacteriological risks, whereas above 90°C the quality of the finished coffee, particularly its organoleptic quality, may suffer.

If the contact with the green coffee is effected in counter-current manner, the water or treated aqueous solution is fed in at a temperature preferably from 85 to 120°C and the contact lasts 1 to 6 hours. On account of the dynamic method used and the shorter period of contact, these conditions of treatment for the green coffee are equivalent to those described in the previous paragraph.

The process according to the invention is more favourable from the economic point of view if the resin can be regenerated, i.e. freed from the caffeine and non-caffeine solids which it retains. It may then be re-used in a subsequent operation; it has been found, in this respect, that it does not lose any of its properties and selectivity, even after several dozen cycles of adsorption and desorption (regeneration) of the caffeine and the non-caffeine solids. The mechanical properties are not affected either.

For regeneration, hot polar solvents are conveniently used, e.g. alcohols such as ethanol or isopropanol, ketones and esters such as ethyl acetate. Mixtures of alcohols and water, such as ethanol/water (1:1), are particularly suitable. Under these conditions, the process is carried out at a temperature of at least 90°C under 4 to 8 atmospheres. The resin is thus freed of all the fixed solids, both caffeine and non-caffeine solids.

It will be noted that, between the treated aqueous solution and the aqueous starting solution, the pH does not generally differ by more than 0.3 units, i.e. in amounts which do not affect the organoleptic qualities and consequently do not require any correction.

The decaffeinated green coffee beans are subsequently roasted, thereby producing a very good quality coffee.

The following Examples illustrate the the process. In these Examples, the percentages and ratios are expressed by weight, unless otherwise stated. The principal numerical values relating to these examples are given in the Table.

Examples 1 to 5

In a closed circuit, 1 litre of water is circulated through green coffee then, on leaving this, through resin and, on leaving the resin, is recycled back through the green coffee. The flow rate is 6 l/h, whilst the temperature and treatment time are shown in the Table.

After the end of these operations, the extract is collected, then the resin is washed with water. The extract, washing waters and green coffee are then combined and dried, and a decaffeinated green coffee ready for roasting is thus obtained.

The results obtained are shown in the Table. It should be noted that Example 4 describes partial decaffeination and Example 5 uses a different resin from those in the other examples.

Example 6

Starting from the 159 g of green coffee indicated, 980 g of an extract are prepared in a discontinuous batch, having a total content of soluble matter of 3.40% and a caffeine content of 1.98 g/kg.

This extract is then brought into contact with the resin under the conditions described hereinafter.

The treated extract drawn off after this operation, combined with washing waters of the resin, is mixed with the original green coffee and this mixture is dried with a view to roasting.

The results obtained are given in the Table.

Example 7

From the green coffee, an extract is prepared by a counter-current technique and after thermal concentration this extract has a total content of soluble matter of 19.8% and a caffeine content of 1.15%.

The procedure is then continued as described in Example 6, the results obtained being given in the Table.

### TABLE

| Example No. | 1 | 2 | 3 | 4 | 5 | 6 | 7 |
|---|---|---|---|---|---|---|---|
| Resin (Ambersorb) | XE 340 | XE 340 | XE 340 | XE 340 | XE 348 | XE 340 | XE 340 |
| Quantity of green coffee | 250 g | 250 g | 250 g | 250 g | 250 g | 159 g | 284 g |
| Quantity of resin | 62.7 g | 69.7 g | 87.1 g | 25.0 g | 69.7 g | 35 g | 35 g |
| Specific surface area of resin ($m^2/g$) | 400 | 400 | 400 | 400 | 500 | 400 | 400 |
| Resin/total soluble matter | 1.20 | 1.33 | 1.66 | 0.48 | 1.33 | 1.05 | 0.59 |
| Treatment time (hours) | 8 | 8 | 8 | 8 | 8 | 2 | 2 |
| Temperature | 70°C | 70°C | 70°C | 70°C | 70° | 65°C | 65°C |
| Degree of decaffeination obtained | 96.1 | 97.5 | 98.3 | 58.0 | 90.6 | 80.0 | 70.4 |
| % caffeine/resin | 4.8 | 4.4 | 3.5 | 7.2 | 4.0 | 4.3 | 7.0 |
| % dry matter/resin | 7.8 | 7.4 | 6.6 | 11.1 | 10.9 | 7.2 | 11.6 |
| Non-caffeine solids/caffeine | 0.63 | 0.68 | 0.9 | 0.6 | 1.7 | 0.7 | 0.66 |

0049357

## Claims

1. A process for extracting caffeine from an aqueous solution containing it together with other non-caffeine solids, the aqueous solution having been derived from green coffee, characterised in that the solution is contacted with a non-ionic microporous resin having pores with an average diameter of 6 to 40 Å, whereby caffeine is extracted from said solution.

2. A process as claimed in claim 1, characterised in that the resin has a specific surface area of at least 400 $m^2$/g.

3. A process as claimed in either of claims 1 and 2, characterised in that the aqueous solution contains 1 to 30% by weight of total soluble matter.

4. A process as claimed in any one of the preceding claims, characterised in that the solution is brought into contact with the resin at a temperature of from 60 to 90°C.

5. A process as claimed in any one of the preceding claims characterised in that the solution is brought into contact with the resin in a proportion of resin to total soluble matter of from 0.5:1 to 2.5:1.

6. A process for the total or partial decaffeination of green coffee which incorporates a process as claimed in any one of the preceding claims.

**European Patent Office**

## EUROPEAN SEARCH REPORT

Application number

EP 81 10 6602

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | A 23 F 5/22 |
| Y | GB - A - 1 488 340 (GENERAL FOODS)<br><br>* claims 1,4; page 3, lines 55-63; example * | 1-4,6 | |
| Y | FR - A - 2 297 004 (NESTLE)<br><br>* claims 1-3,5,6; page 3, line 31 to page 4, line 6; page 4, lines 15-31; examples 1 and 2 *<br>& US - A - 4 031 251 | 1-6 | |
| Y | US - A - 4 064 043 (C. KOLLMAN)<br><br>* claim 1; column 2, lines 40-60; column 3, lines 39-60 * | 1,2 | TECHNICAL FIELDS SEARCHED (Int.Cl. 3)<br><br>A 23 F 5/22<br>A 23 F 5/20<br>C 07 D 473/12<br>B 01 J 20/22 |
| Y | US - A - 4 040 990 (J. NEELY)<br><br>* claims 1,3,4; column 2, lines 48-60; column 7, line 46 to column 8, line 14 * | 1,2 | |
| Y | CHEMICAL ABSTRACTS, vol. 89, 1978, page 475, abstract 116896p, COLUMBUS, OHIO (US)<br>W. AVERILL et al.: "Concentration and GC determination of organic compounds from air and water"<br>& Chromatogr. Newsl. 1978, 6(2), 30-2<br><br>* the whole abstract * | 1,2 | CATEGORY OF CITED DOCUMENTS<br><br>X: particularly relevant if taken alone<br>Y: particularly relevant if combined with another document of the same category<br>A: technological background<br>O: non-written disclosure<br>P: intermediate document<br>T: theory or principle underlying the invention<br>E: earlier patent document, but published on, or after the filing date<br>D: document cited in the application<br>L: document cited for other reasons |
| A | I & EC PRODUCT RESEARCH AND DEVELOPMENT, vol. 7, no. 2, June 1968,<br>R.L. GUSTAFSON et al.: "Adsorption of organic species by high surface area styrene-divinylbenzene copolymers", pages 107-115 ./. | | &: member of the same patent family, corresponding document |

The present search report has been drawn up for all claims

| Place of search | Date of completion of the search | Examiner |
|---|---|---|
| The Hague | 14.01.1982 | DESMEDT |

EPO Form 1503.1 06.78

0049357

European Patent
Office

EUROPEAN SEARCH REPORT

Application number

EP 81 10 6602

| Category | Citation of document with indication, where appropriate, of relevant passages | Relevant to claim |
|---|---|---|
| | * table I, page 108; table IV, page 112; page 114 * | 1,2,6 |
| | --- | |
| A | EP - A - 0 013 451 (UNION CARBIDE) | |
| A | US - A - 4 042 498 (D. KENNEDY) | |
| | * claim 1 * | 1,2 |

DOCUMENTS CONSIDERED TO BE RELEVANT

CLASSIFICATION OF THE APPLICATION (Int. Cl.³)

TECHNICAL FIELDS SEARCHED (Int. Cl.³)